# DEMANDE DE BREVET EUROPEEN

(11) **EP 1 693 286 A1**
(43) Date de publication de la demande: **23.08.2006**
(21) Numéro de dépôt: 06003370.1
(22) Date de dépôt: 20.02.2006
(51) Int. Cl.: B62D 65/02, F16B 5/12, F16B 2/20

(54) **Dispositif de jonction par emboîtement entre un élément de façade et un chassis, d'un tableau de commande notamment**

(30) Priorité: 22.02.2005 FR 0501758
(71) Demandeur: VALEO SYSTEMES THERMIQUES, 78321 Le Mesnil St Denis Cedex (FR)
(72) Inventeur: Guichardon, Stéphane, 78380 Bougival (FR); Boniface, Sébastien, 77700 Bailly Romainvillier (FR)

(57) **Abrégé**

L'invention a pour objet un dispositif de jonction entre deux éléments (1,2) assemblés l'un à l'autre par des organes de liaison coopérants (3,4) qu'ils comportent respectivement. Un bord (8) de l'un au moins des éléments (1,2) comporte au moins une zone déformable (5) disposée en regard d'un doigt d'appui (6) réalisé sur l'autre élément (1,2), pour rattraper un éventuel jeu entre les éléments (1,2) assemblés par mise en appui du doigt (6) contre la zone déformable (5).

## Description

### Domaine technique de l'invention.

L'invention est du domaine des dispositifs de jonction par emboîtement entre un élément de façade et un châssis qui le reçoit, notamment d'un tableau de commande ou analogue. Elle a pour objet un tel dispositif de jonction dans lequel l'élément de façade est rapporté par clipage sur le châssis.

### Etat de la technique.

Dans le domaine automobile, il est fréquent d'assembler par emboîtement un élément de façade sur un châssis. Un tel assemblage est par exemple utilisé pour un tableau de commande ou analogue, dans lequel un boîtier reçoit sur sa face avant un élément de façade. On comprendra néanmoins que la présente invention est applicable à tout ensemble dans lequel un élément de façade est rapporté sur un boîtier ou un châssis analogue. Plus précisément, le châssis est équipé de clips qui sont destinés à être logés à l'intérieur de fenêtres que comporte l'élément de façade en correspondance. L'emboîtement est réalisé par passage en force des clips jusqu'à leur prise d'appui contre le bord des fenêtres.

De telles modalités d'assemblage permettent une jonction entre l'élément de façade et le châssis. Cependant il est nécessaire d'ajuster au mieux les positions relatives entre les clips et les fenêtres pour éviter un jeu entre l'élément de façade et le châssis, un tel jeu étant source de nuisances sonores et de vibrations. Un tel assemblage rigoureux est difficile à obtenir, et nécessite plusieurs reprises du moule à partir duquel est formé l'élément de façade. Il en ressort un surcoût de fabrication. De surcroît, malgré les efforts que nécessite l'obtention de cet assemblage rigoureux, un jeu perdure entre les clips et les bords des fenêtres.

### Objet de l'invention.

Le but de la présente invention est de proposer un dispositif de jonction entre deux éléments assemblés l'un à l'autre, organisé pour rattraper un éventuel jeu entre ces éléments assemblés. Il est plus particulièrement visé par la présente invention de permettre un tel rattrapage de jeu par la mise en oeuvre de moyens simples n'induisant pas une complexité accrue des moyens d'assemblage des éléments entre eux. En outre, il est visé de proposer des moyens de rattrapage d'un jeu éventuel entre les éléments assemblés, qui soient sans incidence dans le cas où les éléments sont assemblés entre eux idéalement, c'est-à-dire sans induire la présence d'un jeu.

Selon une application de la présente invention, il est plus particulièrement proposé de remédier aux problèmes susvisés relatifs à un dispositif de jonction par emboîtement entre un élément de façade et un châssis qui le reçoit. Selon cette application, il est plus particulièrement visé par la présente invention de proposer un tel dispositif de jonction mettant en oeuvre des clips que comporte le boîtier en coopération avec des fenêtres agencées sur l'élément de façade, qui permet de neutraliser un éventuel jeu entre le châssis et l'élément de façade assemblés.

Dans sa généralité, le dispositif de la présente invention est un dispositif de jonction entre deux éléments assemblés l'un à l'autre par des organes de liaison coopérants qu'ils comportent respectivement. Selon la présente invention, un tel dispositif est principalement caractérisé en ce qu'un bord de l'un au moins des éléments comporte au moins une zone déformable disposée en regard d'un doigt d'appui réalisé sur l'autre élément.

La zone déformable est par exemple formée par une fragilisation de la matière de l'élément.

Selon un exemple de réalisation de cette fragilisation, celle-ci est formée à partir d'un retrait de matière ménagé au voisinage du bord de l'élément.

Selon une variante de réalisation, ce retrait de matière est conformé en saignée pratiquée à travers la paroi de l'élément au voisinage de son bord. Cette saignée ménage notamment une languette déformable s'étendant entre la saignée et le bord de l'élément. Accessoirement, la saignée est comblée d'un matériau souple.

Selon un autre mode de réalisation, le retrait de matière est formé d'un dégagement ménagé en bordure de l'élément. Accessoirement, ledit dégagement est comblé par de la matière souple.

De préférence, l'apport du matériau souple, soit dans la saignée soit dans le dégagement, est réalisé par surmoulage.

Selon une autre forme de réalisation de ladite fragilisation, celle-ci est formée d'une conformation irrégulière du bord de l'élément formant des reliefs susceptibles de se déformer sous l'effet d'une poussée exercée par le doigt d'appui. Ces reliefs sont par exemple conformés en vaguelettes ou analogues.

Selon une première forme de réalisation de la répartition des zones déformables et des doigts d'appui, chacun des éléments comporte au moins une zone déformable et au moins un doigt d'appui, préférentiellement disposés en alternance.

Selon une autre forme de réalisation de la répartition des zones déformables et des doigts d'appui, l'un des éléments comporte une pluralité de zones déformables tandis que l'autre élément comporte une pluralité de doigts d'appui.

Selon un exemple de réalisation des dits organes de liaison, ceux-ci sont des connecteurs coopérants par complémentarité de forme.

Plus particulièrement, les dits organes de liaison sont constitués par des clips ménagés sur l'un des éléments, qui sont logés dans des fenêtres que comporte l'autre élément.

Selon un autre exemple de réalisation des dits organes de liaison, ceux-ci sont des moyens de vissage des éléments l'un à l'autre.

D'une manière générale, on comprendra que les dispositions de la présente invention sont applicables à des organes de liaison quelconques, leurs structure n'interférant pas dans l'organisation des moyens de rattrapage de jeu proposés par l'invention.

Selon une application de l'invention, l'un des éléments est par exemple un élément de façade, tandis que l'autre élément est un châssis support de l'élément de façade. Selon une autre application de l'invention, les éléments sont des coques assemblées entre elles. Par exemple, ces coques sont deux éléments d'un boîtier, notamment d'une installation de chauffage, ventilation et/ou climatisation. D'une manière générale, on comprendra que l'invention est applicable au rattrapage de jeux entre deux quelconques éléments assemblés entre eux par des organes de liaison coopérants.

Dans un cadre particulier d'application de l'invention à un élément de façade assemblé à un châssis, le dispositif de jonction de l'invention est particulièrement adapté pour un tableau de commande, notamment pour un habitacle de véhicule automobile.

Pour préciser une application privilégiée du dispositif de l'invention, et pour mettre en évidence les avantages qu'il procure, celui-ci est par exemple un dispositif de jonction par emboîtement entre un premier élément constitué d'un élément de façade, et un deuxième élément constitué d'un châssis qui le supporte. Ce dispositif met en oeuvre des organes de liaisons coopérants notamment constitués par des clips que comporte le châssis, qui coopèrent avec des fenêtres que comporte l'élément de façade.

Ces dispositions sont telles que les clips sont logés à l'intérieur des fenêtres, en prenant appui contre le bord de ces dernières pour interdire un retrait spontané de l'élément de façade au-delà du châssis.

L'application de l'invention à un tel dispositif de jonction est principalement reconnaissable en ce que l'élément de façade comporte au voisinage de son bord extérieur au moins une zone déformable, tandis que le châssis comporte en regard de cette zone déformable un doigt d'appui contre la tranche de l'élément de façade.

Selon une autre définition de la présente invention, le dispositif de jonction associe d'une part les clips pour un emboîtement entre l'élément de façade et le châssis, et d'autre part au moins une zone déformable ménagée en bordure de l'élément de façade contre laquelle prend appui un doigt que comporte le châssis, pour neutraliser un éventuel jeu entre les clips et le bord des fenêtres à partir d'une poussée antagoniste exercée par le doigt au moins contre la zone déformable et le châssis.

Plus précisément, après emboîtement de l'élément de façade sur le châssis et la mise en position des clips à l'intérieur des fenêtres visant à rendre cet emboîtement irréversible, le doigt d'appui au moins que comporte le châssis exerce une poussée contre la tranche de l'élément de façade pour presser la zone déformable que ce dernier comporte à l'encontre de l'appui que prennent les clips contre les bords des fenêtres. Il en ressort finalement que l'association entre la zone déformable et le doigt d'appui constitue des moyens de blocage de l'élément de façade sur le châssis à l'encontre des vibrations auxquelles ils sont soumis.

Grâce à ces dispositions, la jonction entre l'élément de façade et le châssis par l'intermédiaire des clips est susceptible de présenter un jeu, sans que ce jeu ne soit préjudiciable en raison dudit blocage de l'élément de façade contre le châssis, obtenu à partir de l'appui que prend le doigt contre la tranche de l'élément de façade et de la déformation élastique du bord de ce dernier qui en résulte.

La zone déformable au moins que comporte l'élément de façade est avantageusement formée à partir d'une fragilisation de sa matière. Cette fragilisation est par exemple formée d'une saignée pratiquée à travers l'élément de façade pour ménager une languette déformable s'étendant entre la saignée et le bord de l'élément de façade. La saignée ménage un espace disponible pour recevoir la languette déformée par la prise d'appui du doigt contre celle-ci.

De préférence, les zones déformables sont en pluralité ménagée le long du bord de l'élément de façade, des doigts étant disposés en regard de chacune des zones déformables. Plus particulièrement, les zones déformables sont ménagées à équidistance entre deux fenêtres consécutives de l'élément de façade, pour favoriser l'homogénéité de l'appui que prennent les doigts contre la tranche de l'élément de façade à l'encontre de l'appui antagoniste que prennent les clips contre le bord des fenêtres.

Tel que visé plus haut, le dispositif de jonction de la présente invention est notamment applicable à un tableau de commande. Cette application n'est toutefois pas restrictive quant à la portée de l'invention, qui est applicable à tout ensemble dans lequel un élément de façade est rapporté sur un boîtier ou un châssis analogue.

### Description des figures.

La présente invention sera mieux comprise à la lecture de la description qui va en être faite d'une forme préférée de réalisation, en relation avec les figures des planches annexées, dans lesquelles :

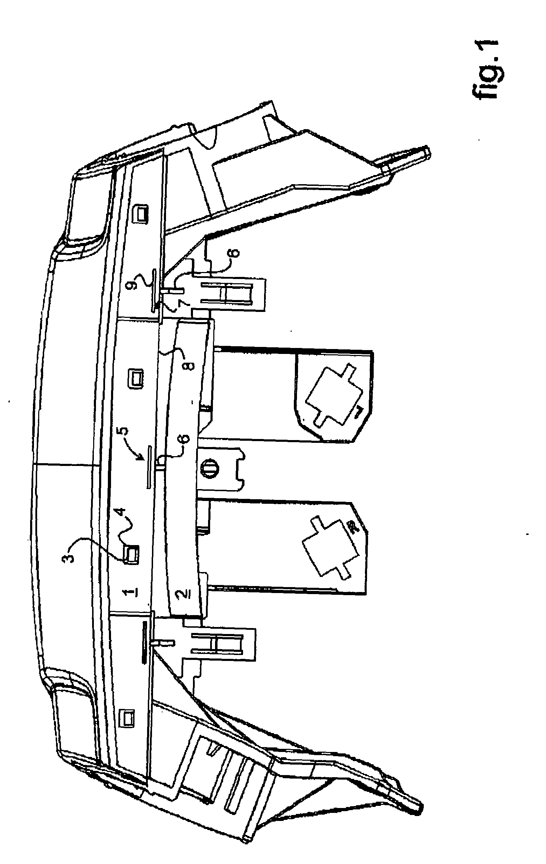

La fig.1 est une illustration en vue de dessus d'un élément de façade assemblé sur un châssis par l'intermédiaire d'un dispositif de jonction de la présente invention.

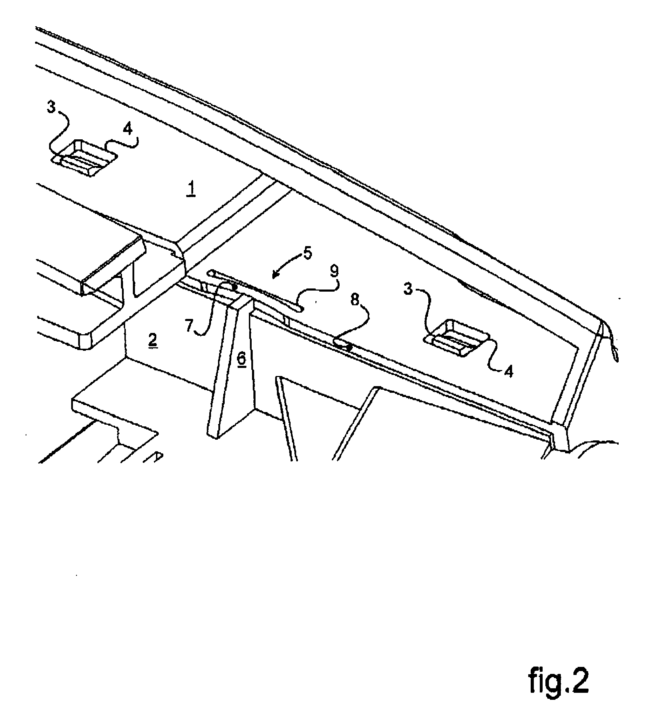

La fig.2 est un détail en perspective de la fig.1.

Sur les figures, un élément de façade (1) est assemblé par emboîtement sur un châssis (2). Cet emboîtement est réalisé au moyen de clips (3) que comporte le châssis (2), logés à l'intérieur de fenêtres (4) ménagées sur l'élément de façade (1). De telles dispositions connues de l'art antérieur présentent l'inconvénient d'avoir à réaliser un assemblage rigoureux entre les clips (3) et les fenêtres (4) pour éviter la présence d'un jeu entre eux. Dans la pratique et quels que soient les efforts développés pour réduire ce jeu, celui-ci persiste aussi faible soit-il. Il en résulte des nuisances sonores provoquées par le flottement de l'élément de façade (1) sur le châssis (2), qui sont soumis à des vibrations. Pour neutraliser ce jeu, il est proposé par l'invention d'associer à l'assemblage entre l'élément de façade (1) et le châssis (2) au moyen des clips (3) coopérant avec les fenêtres (4), des dispositions visant à plaquer l'élément de façade (1) contre le châssis (2) suivant une direction antagoniste à l'appui que prennent les clips (3) contre le bord des fenêtres (4).

Sur l'exemple de réalisation illustré, ces dispositions consistent à rendre élastiquement déformable au moins une zone (5) située en bordure de l'élément de façade (1), et à ménager sur le châssis (2) un doigt d'appui (6) contre cette zone déformable (5), à l'encontre de l'appui antagoniste que prennent les clips (3) contre le bord des fenêtres (4).

Dans le cas où l'emboîtement est idealement réalisé entre l'élément de façade (1) et le châssis (2), le jeu entre les clips (3) et les fenêtres (4) est nul, leur coopération étant parfaite. Le doigt d'appui (6) affleure le bord de l'élément de façade (1), sans imprimer une déformation de la zone (5) située en bordure de ce dernier. L'élément de façade (1) est dans ce cas maintenu sur le châssis (2) de manière parfaitement ajustée par les clips (3) emboîtés à l'intérieur des fenêtres (4). Dans une telle configuration, le doigt d'appui (6) n'est pas en contact avec le bord de l'élément de façade (1).

Dans le cas où le jeu entre les clips (3) et les fenêtres (4) s'accroît, sans toutefois nécessité d'être compenser, le doigt d'appui (6) vient en contact simple contre le bord de l'élément de façade (1).

Lors d'un emboîtement entre l'élément de façade (1) et le châssis (2) imparfait, un jeu est créé entre eux. Pour faire obstacle à une mobilité de l'élément de façade (1) sur le châssis (2), le doigt d'appui (6) comprime la zone déformable (5) pour contrecarrer l'éventuel mouvement de l'élément de façade (1). Lors de la mise en place de l'élément de façade (1), le doigt d'appui (6) vient en contact avec le bord de l'élément de façade (1) en regard de la zone déformable (5), qu'il comprime pour compenser le jeu entre l'élément de façade (1) et le châssis (2). Il en ressort que le jeu est compensé par déformation du bord de l'élément de façade (1) au moyen du doigt d'appui (6) que comporte le châssis (2), ce doigt d'appui (6) étant disposé en regard de la zone déformable (5) que comporte le bord de l'élément de façade (1).

Plus précisément, la zone déformable (5) au moins que comporte l'élément de façade (1) est obtenue à partir de la formation d'une languette (7) déformable ménagée en bordure de l'élément de façade (1). Cette languette (7) est délimitée entre le bord (8) de l'élément de façade (1), et une saignée (9) pratiquée à travers ce dernier (1) au voisinage de son bord (8). La présence de cette saignée (9) autorise un écrasement de la languette (7) par le doigt (6), pour rattraper un éventuel jeu entre les clips (3) et le bord des fenêtres (4). Cette saignée (9) est pratiquée à travers la paroi de l'élément de façade (1) pour ménager un dégagement de matière susceptible d'être occupé par la languette (7) lorsqu'elle est déformée par le doigt (6).

De préférence, l'élément de façade (1) comporte une pluralité de zones déformables (5) qui sont ménagées le long de son bord (8), en étant disposées sensiblement à équidistance de deux fenêtres (4) voisines.

## Revendications

1. Dispositif de jonction entre deux éléments (1,2) assemblés l'un à l'autre par des organes de liaison coopérants (3,4) qu'ils comportent respectivement, **caractérisé en ce qu'**un bord (8) de l'un au moins des éléments (1,2) comporte au moins une zone déformable (5) disposée en regard d'un doigt d'appui (6) réalisé sur l'autre élément (1,2).

2. Dispositif selon la revendication 1, **caractérisé en ce que** la zone déformable (5) est formée par une fragilisation de la matière de l'élément (1,2).

3. Dispositif selon la revendication 2, **caractérisé en ce que** ladite fragilisation est formée à partir d'un retrait de matière ménagé au voisinage du bord (8) de l'élément (1,2).

4. Dispositif selon la revendication 3, **caractérisé en ce que** ledit retrait de matière est conformé en saignée (9) pratiquée à travers la paroi de l'élément (1,2) au voisinage de son bord (8).

5. Dispositif selon la revendication 4, **caractérisé en ce que** la saignée (9) ménage une languette (7) déformable s'étendant entre la saignée (9) et le bord (8) de l'élément (1,2).

6. Dispositif selon l'une quelconque des revendications 4 et 5, **caractérisé en ce que** la saignée (9) est comblée d'un matériau souple.

7. Dispositif selon la revendication 3, **caractérisé en ce que** le retrait de matière est formé d'un dégagement ménagé en bordure de l'élément (1,2).

8. Dispositif selon la revendication 7, **caractérisé en ce que** ledit dégagement est comblé par de la matière souple.

9. Dispositif selon les revendications 6 et 8; **caractérisé en ce que** l'apport du matériau souple est réalisé par surmoulage.

10. Dispositif selon la revendication 2, **caractérisé en ce que** ladite fragilisation est formée d'une conformation irrégulière du bord (8) de l'élément (1,2) formant des reliefs susceptibles de se déformer sous l'effet d'une poussée exercée par le doigt d'appui (6).

11. Dispositif selon la revendication 10, **caractérisé en ce que** lesdits reliefs sont conformés en vaguelettes.

12. Dispositif selon l'une quelconque des revendications 1 à 11, **caractérisé en ce que** chacun des éléments (1,2) comporte au moins une zone déformable (5) et au moins un doigt d'appui (6).

13. Dispositif selon l'une quelconque des revendications précédentes, **caractérisé en ce que** l'un des éléments (1,2) comporte une pluralité de zones déformables (5) tandis que l'autre élément (1,2) comporte une pluralité de doigts d'appui (6).

14. Dispositif selon l'une quelconque des revendications précédentes, **caractérisé en ce que** lesdits organes de liaison (3,4) sont des connecteurs coopérants par complémentarité de forme.

15. Dispositif selon la revendication 14, **caractérisé en ce que** lesdits organes de liaison sont constitués par des clips (3) ménagés sur l'un des éléments (1,2) qui sont logés dans des fenêtres (4) que comporte l'autre élément (1,2).

16. Dispositif selon l'une quelconque des revendications 1 à 13, **caractérisé en ce que** lesdits organes de liaison sont des moyens de vissage des éléments (1,2) l'un à l'autre.

17. Dispositif selon l'une quelconque des revendications précédentes, **caractérisé en ce que** l'un des éléments est un élément de façade (1), l'autre élément étant un châssis (2) support de l'élément de façade (1).

18. Dispositif selon l'une quelconque des revendications 1 à 16, **caractérisé en ce que** les éléments (1,2) sont des coques assemblées entre elles.

19. Dispositif selon la revendication 18, **caractérisé en ce que** les coques sont deux éléments d'un boîtier d'une installation de chauffage, ventilation et/ou climatisation.
